# EUROPÄISCHE PATENTSCHRIFT

(11) **EP 0 795 711 B1**
(45) Veröffentlichungstag und Bekanntmachung des Hinweises auf die Patenterteilung: **03.09.2003**
(21) Anmeldenummer: 97103998.7
(22) Anmeldetag: 11.03.1997
(51) Int. Cl.: F16L 23/00, F16L 23/14, F24F 13/02, F16L 25/00

(54) **Verbindungs- und Abdichtungsanordnung für Lüftungskanäle**
Joint and sealing arrangement for ventilation conduits
Dispositif de jonction et d'étanchéité pour conduits de ventilation

(30) Priorität: 02.07.1996 DE 29611408 U; 11.03.1996 DE 29605121 U
(43) Veröffentlichungstag der Anmeldung: 17.09.1997
(73) Patentinhaber: Smitka Profex GmbH, 58644 Iserlohn (DE)
(72) Erfinder: Smitka, Günter, c/o Smitka Profex GmbH, 58644 Iserlohn (DE)
(74) Vertreter: Patentanwälte Wenzel & Kalkoff

(56) Entgegenhaltungen:
- EP-A- 0 234 062
- EP-A- 0 634 598
- GB-A- 2 011 000
- US-A- 4 558 892

## Beschreibung

Die Erfindung betrifft eine Verbindungs- und Abdichtungsanordnung für Lüftungskanäle nach dem Oberbegriff von Anspruch 1.

Eine bekannte Verbindungs- und Abdichtungsanordnung der vorstehenden Art ergibt sich beispielsweise aus der DE-PS 23 13 425. Beim Herstellen eines Verbindungsflanschrahmens werden die Schenkel der Eckwinkel in Taschen bildende obere Teile der Flanschprofile eingeschoben bis zum Anschlag eines abgestuften Eckstücks des Eckwinkels an dem Flanschprofil. Anschließend wird jeder Schenkel der Eckwinkel in dem entsprechenden Flanschprofil befestigt. Wenn der fertige Verbindungsflanschrahmen als Ganzes auf das Ende des zugeordneten Kanalteilstücks aufgeschoben ist und dabei die Kanalwand in dem unteren L-Schenkel jedes Flanschprofils bis zum Anschlag an der vorderen Wand des Flanschprofils vorgeschoben ist, liegt der vordere Rand der Kanalwand im Eckbereich - im Querschnitt gesehen - unter dem zugehörigen Eckwinkel.

Die Eckbereiche der Kanalwand liegen im übrigen frei (Fig. 1 der DE-PS 23 13 425) und werden dort von den Eckwinkeln übergriffen bzw. umgriffen.

Damit der Spalt zwischen den Innenseiten des Eckwinkels und der unmittelbar gegenüberliegenden Kanalwand zur Vermeidung von Undichtigkeiten möglichst dünn ist, sind die abgestuften Eckstücke der Eckwinkel an der Innenecke mit einem nach innen vorstehenden inneren Abwinkelungsbereich versehen, die den freiliegenden Eckbereich der Kanalwand beinahe berührt, auf jeden Fall aber den Spalt möglichst gering hält (vgl. Fig. 5 der DE-PS 23 13 425). Der Abwinkelungsbereich soll die Dicke des Falzes zwischen der oberen Tasche des Flanschprofils und dem unteren Aufnahmeraum für die Kanalwand in dem Flanschprofil ausgleichen. Der Spalt fällt, bedingt durch Fertigungsund Montagetoleranzen verschieden dünn aus.

Der in den Eckbereichen zwischen den Innenseiten des Eckwinkels und dem gegenüberliegenden Eckbereich der Kanalwand entstehende Zwischenraum bzw. Spalt wird gewöhnlich dadurch abgedichtet, daß kurz vor dem Verbinden der mit Verbindungsflanschrahmen ausgerüsteten Kanalteilstücke Klebestreifen von außen, also im Bereich der Verbindungsebene zweier aneinandergrenzender Kanalteilstücke, so auf die freiliegenden Außenseiten der Winkelstücke aufgeklebt werden, daß sie den winkelförmigen Spalt bzw. Zwischenraum abschließen bzw. verdecken.

Anstelle der Abdichtung mittels Klebeband auf der Baustelle wird jedoch überwiegend versucht, den Spalt mittels von Hand aufgetragener Dichtmasse bereits in der Produktion zu kitten. Hierfür sind an Eckwinkeln bekannter Systeme regelrechte Kittaschen durch eine entsprechende Verformung des inneren Eckbereichs der Eckwinkel vorhanden. Doch diese Methode hat vor allem folgende Mängel:
a) Die Menge und Qualität einer solchen Spaltabdichtung mit Kittmasse ist nicht von gleichmäßiger Güte, weil sie individuell von Hand aufgetragen wird.
b) Eine mangelhafte Kittung ist mit dem Auge nicht unbedingt erkennbar. Um Sicherheit zu erlangen, müßte jedes einzelne Kanalstück mit seinen acht Winkelbereichen abgepreßt werden.
c) Teile der Abdichtung können im Laufe der Zeit abbröckeln, und die Dichtung verliert dadurch ihre Funktion.
d) Alles in allem ist diese Arte der manuellen Kittabdichtung unzuverlässig und teuer.

EP-A-634 598 zeigt eine Verbindungs- und Abdichtungsanordnung gemäß dem Oberbegriff des Anspruchs 1.

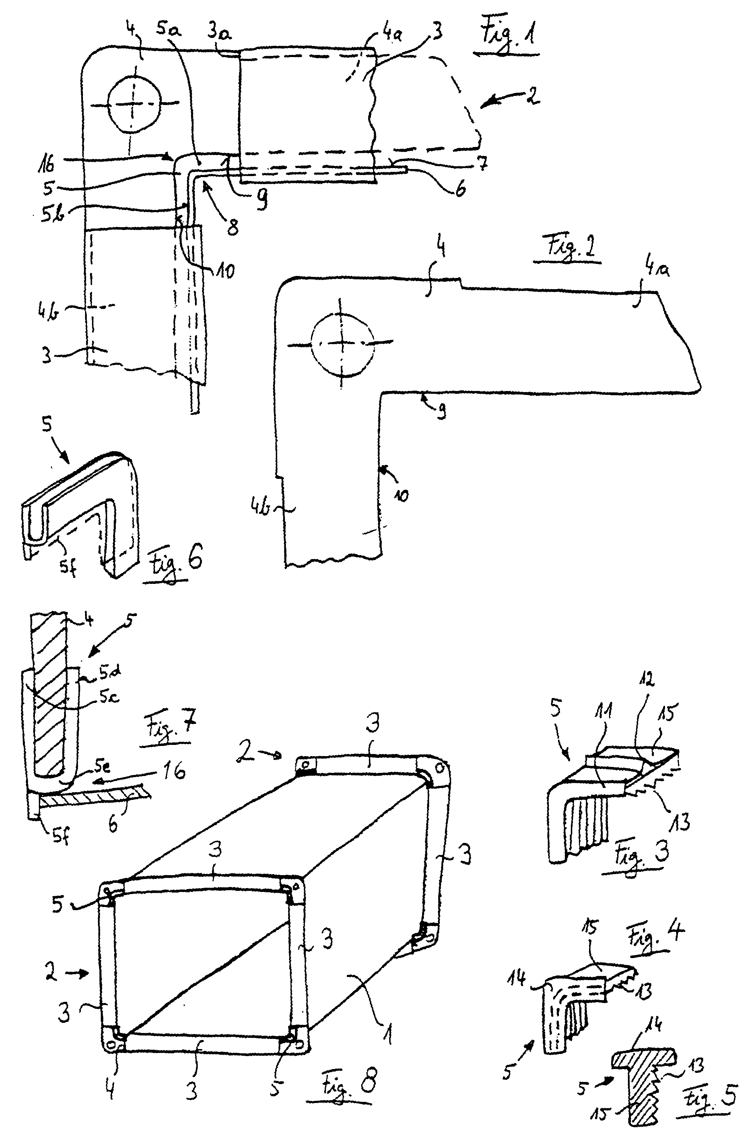

Eine Verbindungs- und Abdichtungsanordnung ebenso nach dem Oberbegriff von Anspruch 1 ist Fig. 2 der EP-A-234 062 zu entnehmen. Das als Formteil aus elastischem Material ausgebildete Dichtelement besteht bei dieser bekannten Anordnung aus einem Mehrkammer-Dichtungsprofil, das an dem Verbindungsflanschrahmen umlaufend in eine Kammer eingelegt ist, die jeweils durch Abstufungen der Flanschprofile (Fig. 3a + Fig. 3b) in Verbindung mit den Randbereichen der Außenseiten der Kanalwand gebildet werden, wenn zwei Verbindungsflanschrahmen miteinander verbunden werden. Zur Bildung der Kammern ist deshalb die Herstellung von Sonderflanschprofilen mit entsprechend weit vorspringenden Abstufungen erforderlich. Damit das Dichtungsprofil auch in den kritischen Eckbereichen der Verbindungsflanschrahmen abdichtend auf dem frei liegenden Eckbereich der Außenseite der Kanalwand gehalten wird, weisen die Eckwinkel jeweils eine der Form des Dichtungsprofils im Eckbereich entsprechend angepasste Kröpfung auf (Fig. 4), so daß sowohl die Flanschprofile als auch die Eckwinkel dieser bekannten Abdichtungsanordnung einen höheren Fertigungsaufwand erfordern als allgemein übliche Flanschprofil- und Eckwinkelformen. Im übrigen wird mit einem umlaufenden Dichtungsprofil die Abdichtung von zwei miteinander verbundenen Verbindungsflanschrahmen vorgenommen. Hierfür ist eine besonders sorgfältige Montage beim Herstellen der Verbindung zwischen zwei Verbindungsflanschrahmen erforderlich.

Eine ganz andere Abdichtung wird in der EP-A-234 062 für eine zweite Ausgestaltung des Verbindungsflanschrahmens (Fig. 5) vorgeschlagen. Auch hier weist das Flanschprofil einen Rücksprung auf, damit ein in der Ebene der Vorderwand des Flanschprofils unterhalb derselben angeordneter Dichtungsstreifen an dem Rücksprung des Flanschprofils in am Verbindungsflanschrahmen umlaufender weise befestigt werden kann. Die Kanalwand endet hier im Abstand vor dem Dichtstreifen, so daß die Innenseiten des Eckwinkels in besonderer Weise geformt sein müssen, damit der sich dort bildende Spalt nicht zu groß wird.

Die Erfindung hat sich die Aufgabe gestellt, den zwischen dem Eckwinkel und dem gegenüberliegenden Eckbereich der Kanalwand gebildeten Spalt in einfacher Weise zuverlässig abzudichten.

Die erfindungsgemäße Lösung dieser Aufgabe ist dem kennzeichnenden Teil von Anspruch 1 zu entnehmen.

Im Gegensatz zu den bisher bekannt gewordenen Lösungen für die Spaltabdichtung wird erfindungsgemäß ein Dichtelement als Formteil aus elastischem Material, das industriell herstellbar ist, unmittelbar in den Spalt mit Begrenzung auf den freiliegenden Eckbereich der Außenseite der Kanalwand eingebracht so daß es den winkelförmigen Spaltraum ausfüllt und so abdichtet. Bisher hat man überwiegend versucht, den Spalt nur von außen zu verschließen, ggf. auch noch durch Schaffung eines winkelförmigen Aufnahmeraums (Tasche) durch gewölbte oder abgebogene Innenecken der Eckwinkel, aber letztlich hat man - mit Ausnahme der vorerwähnten Lösung gemäß EP-A-234 062 nicht den nach wie vor bestehenden Spalt zwischen den Innenseiten der Eckwinkel und dem Eckbereich der Kanalwand sicher abdichtend ausgefüllt, erst recht nicht mit einem als Formkörper vorher hergestellten Dichtelement für jeden Eckbereich einzeln sondern allenfalls mit einem im Verbindungsflanschrahmen eingebetteten und ringsumlaufenden Dichtungsprofil oder mit Kittmassen, bei deren Anwendung sich in jedem Falle die oben aufgeführten Nachteile ergeben. Das Einfügen eines einzelnen formstabilen, elastischen Dichtelementes in den Spalt gibt vor allem auch die Möglichkeit, die Spaltbildung bzw. die Einhaltung eines möglichst dünnen Spaltes nicht länger als Problem zu sehen und zu handhaben. Im Gegenteil ist es für die erfindungsgemäße Lösung sogar erwünscht, daß der Spalt eine gewisse Mindestbreite aufweist, damit man das Dichtelement sicher abdichtend mit festem Sitz im Zwischenraum bzw. Spalt selbst anordnen kann. Diese Erkenntnis ist neu und widerspricht der bisherigen Auffassung des Fachmanns.

Wie noch gezeigt wird, läßt die Erfindung mindestens zwei Lösungen insofern zu, als man das Dichtelement von der Form und von der Materialauswahl her so gestalten kann, daß es entweder nach dem Aufschieben des Verbindungsflanschrahmens auf das Kanalteilstück in den bereits gebildeten Spalt eingedrückt bzw. eingetrieben wird oder daß es bereits vor dem Aufschieben des Verbindungsflanschrahmens auf das Kanalteilstück an den zugeordneten Eckwinkeln, und zwar jeweils an deren Innenecke, so befestigt bzw. aufgebracht bzw. aufgesteckt wird, daß es beim Aufschieben des Verbindungsflanschrahmens auf das Kanalteilstück an seinem Platz bleibt und nicht verschoben wird, sondern seine Lage beibehält und den Spalt ausfüllt und sicher abdichtet.

Es versteht sich von selbst, daß Form und Größe des Dichtelementes auf die Spaltform und Spaltgröße abgestimmt sein müssen. Fertigungs- und Montagetoleranzen werden durch die elastischen Eigenschaften des Dichtelementes ausgeglichen.

Grundsätzlich besteht auch die Möglichkeit, das Dichtelement beispielsweise in Form eines U-förmigen Winkelprofils auf den freien Eckbereich der Kanalwand aufzuschieben. Diese Lösung verlagert allerdings den Sitz des Dichtelementes an die acht Ecken eines Kanalteilstücks. Vorzuziehen ist das Anbringen des Dichtelementes entweder am Verbindungsflanschrahmen selbst, nämlich an den Innenecken der Eckwinkel, oder aber das Einbringen bzw. Eintreiben des Körpers des Dichtelementes in den Zwischenraum bzw. Spalt, wenn dieser bereits gebildet ist.

Das Dichtelement soll elastisch, z. B. aus einem geeigneten Kunststoff gespritzt, sein, damit es Ungenauigkeiten in der Spaltbreite ausgleichen und sich abdichtend an die angrenzenden Dichtflächen anlegen bzw. anpressen kann, nämlich auf der einen Seite an die im Winkel zueinander stehenden Innenseiten des Eckwinkels und auf der anderen Seite an die freiliegende Außenfläche des Eckbereichs der Kanalwand. Das Dichtelement soll andererseits mechanisch widerstandsfähig sein, nämlich eine ausreichende Härte aufweisen, damit es beim Eintreiben in den Spalt oder bei der Montage, wenn es vorher am Winkel befestigt worden ist, nicht beschädigt wird. Außerdem soll eine ausreichende Steifigkeit des Materials vorhanden sein, damit es trotz der notwendigen Elastizität formstabil ist und einen festen Sitz im Spalt bzw. am Eckwinkel erhält.

Ein T-förmiger Querschnitt des Dichtelementes verstärkt die Abdichtungswirkung noch mehr als ein umlaufend vorstehender Rand des Dichtelementes.

Vorteilhafte Weiterbildungen sind den weiteren Ansprüchen zu entnehmen.

So ist nach Anspruch 8 ein U-förmiger Querschnitt des Dichtelements vorgesehen, der dem Querschnitt des Eckwinkels im inneren Eckbereich entspricht, um das Dichtelement an der Innenecke des Eckwinkels vor dem Aufsetzen des Verbindungsflanschrahmens auf das Kanalteilstück zu befestigen, beispielsweise durch Festklemmen des Dichtelementes am Eckwinkel durch einen entsprechend eng bemessenen U-förmigen Querschnitt gegenüber dem Innenrand des Eckwinkels in Verbindung mit der Elastizität des Materials des Dichtelementes. Der Boden des U-Profils füllt den Spalt abdichtend aus. Die Befestigung kann auch formschlüssig durch Einrasten bzw. Eindrücken von von dem Dichtelement vorstehenden Noppen oder dgl. in vorgestanzte Löcher des Eckwinkels erfolgen, oder durch Ausbildung als Abdeckplatte, stirnseitig, aber mit Einrasten.

Ausführungsbeispiele der Erfindung werden nachfolgend unter Bezugnahme auf die beigefügten Zeichnungen näher erläutert. In den Zeichnungen zeigen:
- Fig. 1: eine Ansicht einer Ecke eines Verbindungsflanschrahmens in auf einer Kanalwand montierter Lage ;
- Fig. 2: eine Seitenansicht einer ersten Ausführungsform eines zur Bildung des Verbindungsflanschrahmens nach Fig. 1 verwendbaren Eckwinkels;
- Fig. 3: eine perspektivische Ansicht einer ersten Ausführungsform eines Dichtelementes zum Abdichten eines Spaltes zwischen Innenseiten des Eckwinkels und einem freien Eckbereich der Kanalwand;
- Fig. 4: eine perspektivische Ansicht eines zweiten Ausführungsbeispiels eines Dichtelementes;
- Fig. 5: eine Querschnittsansicht des Dichtelementes von Fig. 4;
- Fig. 6: eine perspektivische Ansicht einer dritten Ausführungsform des Dichtelementes, in diesem Fall zum Anbringen an dem Eckwinkel;
- Fig. 7: eine Schnittdarstellung des Dichtelementes von Fig. 6 in montierter Lage;
- Fig. 8: eine perspektivische Ansicht eines an den acht Ecken jeweils mit Dichtelementen ausgestatteten Kanalteilstücks.

Fig. 1 in Verbindung mit Fig. 8 zeigt ein typisches Ausführungsbeispiel der erfindungsgemäßen Verbindungs- und Abdichtungsanordnung für Lüftungskanäle. Auf ein aus Blech bestehendes Kanalteilstück 1 ist an beiden Enden jeweils ein Verbindungsflanschrahmen 2, der aus vier Flanschprofilen 3 und vier Eckwinkeln 4 gebildet ist, aufgeschoben und sogleich oder nach dem Abdichten befestigt. In der Befestigungslage ist die Kanalwand 6 jeweils in dem einen Schenkel des L-förmigen Flanschprofils 3 aufgenommen und bis zum Anschlag an die vordere Wand des Flanschprofils 3 durchgeschoben (vgl. Labyrinth ®-System gemäß Fig. 1 der DE-PS 23 13 425).

Da die Flanschprofile 3 nur bis zu einem Anschlag 3a auf die Schenkel 4a, 4b der Eckwinkel 4 aufgeschoben werden, gibt es einen freien Eckbereich 8 an der Außenseite 7 der Kanalwand 6, der mit den Innenseiten 9, 10 des Eckwinkels 4 einen winkelförmigen Spalt 16 bildet.

In dem Spalt 16 ist ein winkelförmiges Dichtelement 5 angeordnet, das den Spalt 16 vollständig ausfüllt und abdichtet. Dabei liegt die Außenseite des ersten Schenkels 5a des Dichtelementes 5 an der ersten Innenseite 9 des Eckwinkels 4 elastisch federnd an, während sich ein entsprechender Eingriff zwischen dem zweiten Schenkel 5b des Dichtelementes 5 und der zweiten Innenseite 10 des Eckwinkels 4 ergibt. Entsprechend liegen die Innenseiten der Schenkel 5a, 5b des Dichtelementes 5 elastisch federnd und abdichtend an der Außenseite 7 7 der Kanalwand 6 im freien Eckbereich 8 an.

Damit sich für das Dichtelement 5 ein ausreichend breiter Spalt 16 für ein kräftig dimensioniertes Dichtelement ergibt, laufen die Innenseiten 9, 10 der Schenkel 4a, 4b des Eckwinkels 4, wie in Fig. 2 dargestellt ist, ohne Abstufung glatt und eben durch. Dadurch ergibt sich zwischen den Innenseiten 9, 10 des Eckwinkels 4 gegenüber der Außenseite 7 der Kanalwand 6 ein ausreichend dimensionierter Spalt 16.

Das Dichtelement 5 besteht vorzugsweise aus einem elastischen bzw. federnd kompressiblen Kunststoff mit ausreichender Formstabilität und Abriebfestigkeit, damit das Dichtelement 5 beim Montieren sicher zwischen den Metallteilen angeordnet, nämlich unter Druck in den Spalt 16 einsetzbar bzw. eintreibbar ist, ohne daß sich außer der notwendigen elastischen Anpassung an die Form des Spaltes 16 unerwünschte Formänderungen ergeben. Die übrigen notwendigen Materialeigenschaften ergeben sich aus dem Einsatzzweck und den Einsatzbedingungen im Kanalteilstück 1.

In Fig. 3 ist eine Ausführungsform des Dichtelementes 5 dargestellt, das am vorderen Rand einen entsprechend winkelförmigen Anschlag 11 aufweist, der das Eintreiben des Körpers 15 des Dichtelementes 5 in den Spalt 16 entsprechend begrenzt und in der Einbaulage noch zusätzlich abdichtend über den Spalt 16 hinaus vorsteht. Eine Arretierungsnase 12 kann im Abstand von dem Anschlag 11 an der Außenseite des Dichtelementes 5 vorgesehen sein, damit der Eckwinkel 4 zwischen dem Anschlag 11 und der Arretierungsnase 12 aufgenommen werden kann. Auf der Innenseite weist der Körper 15 des Dichtelementes 5 Dichtlippen 13 auf.

In dem weiteren Ausführungsbeispiel für das Dichtelement 5 gemäß Fig. 4 ist ein T-förmiger Querschnitt des Dichtelementes 5 (vgl. Fig. 5) vorgesehen, wobei sich ein winkelförmiger Anschlagrand 14 nach beiden Seiten hin über den Spalt 16 hinaus erstreckt, der von dem Körper 15 des Dichtelementes 5 abdichtend ausgefüllt ist. Auch bei dieser Ausführungsform können Dichtlippen 13 vorgesehen sein.

Eine andere Ausführungsform des Dichtelementes 5 zeigt Fig. 6. Das Dichtelement 5 besteht aus einem winkelförmigen sowie nach außen offenen U-Profil zum Befestigen des Dichtelementes 5 an der Innenecke des Eckwinkels 4, beispielsweise durch Festklemmen des Dichtelementes 5 an den Seiten des Eckwinkels 4 aufgrund entsprechender Dimensionierung beider Teile. Für die Materialauswahl sind die gleichen Gesichtspunkte maßgeblich wie für das Dichtelement 5 in den vorhergehend beschriebenen Ausführungsformen. Fig. 7 zeigt diese Alternativform des Dichtelementes 5 montiert an einem Eckwinkel 4 - vor der Montage des Verbindungsflanschrahmens 2 auf dem Kanalteilstück 1 im Gegensatz zu den vorhergehend beschriebenen Ausführungformen des Dichtelementes 5. Die Schenkel 5c und 5d des Dichtelementes 5 haften fest an dem Eckwinkel 4 an, während der Boden 5e den Spalt 16 zwischen dem Eckwinkel 4 und der Kanalwand 6 federnd elastisch ausfüllt und abdichtet. Bei dieser Ausführungsform kann auch eine zusätzliche Dichtlippe 5f vorgesehen sein.

Nach einer weiteren nicht dargestellten Ausführungsform ist das Dichtelement, vorzugsweise aus Kunststoff bestehend, direkt an dem Blech angespritzt, in diesem Falle vorzugsweise an dem Eckwinkel. Das Haftvermögen eines angespritzten und während des Spritzvorgangs ausgeformten Dichtelements kann durch Löcher bzw. Ausnehmungen im Eckwinkel erhöht werden, in die der aufgetragene Kunststoff ebenfalls eindringt und auf diese Weise eine Verankerung des Dichtelements an dem Eckwinkel herbeiführt.

## Patentansprüche

1. Verbindungs- und Abdichtungsanordnung für Lüftungskanäle aus
- Kanalteilstücken (1) mit rechtwinkligem Querschnitt aus Flachmaterial, insbesondere aus Blech oder aus flexiblem Material, und
- Verbindungsflanschrahmen (2), die zum Verbinden der Kanalteilstücke (1) auf die Enden der Kanalteilstücke (1) aufgeschoben und an diesen befestigt sind, wobei
- jeder Verbindungsflanschrahmen (2) aus vier im Querschnitt im wesentlichen L-förmigen Flanschprofilen (3) und aus vier Eckwinkeln (4) besteht, die zum Verbinden der Flanschprofile (3) an den vier Ecken des Verbindungsflanschrahmens (2) mit ihren Schenkeln (4a, 4b) in die offenen Enden der Flanschprofile (3) eingesteckt und an diesen befestigt sind, wobei
- jeder Eckwinkel (4) nach dem Aufschieben des Verbindungsflanschrahmens (2) auf das Kanalteilstück (1) die Außenseite (7) der Kanalwand (6) in dem zwischen den angrenzenden Flanschprofilen (3) frei liegenden Eckbereich (8) übergreift und
- der Spalt (16) zwischen den Innenseiten (9, 10) des Eckwinkels (4) und dem gegenüberliegenden Eckbereich (8) der Außenseite (7) der Kanalwand (6) abgedichtet wird,
- in dem Spalt (16) zwischen den Innenseiten (9, 10) des Eckwinkels (4) und dem frei liegenden Eckbereich (8) der Außenseite der Kanalwand (6) ein als Formteil aus elastischem Material ausgebildetes Dichtelement (5) derart angeordnet ist, daß der Spalt (16) von dem Dichtelement (5) im wesentlichen ausgefüllt und abgedichtet ist,
**dadurch gekennzeichnet, daß**
das Dichtelement (5) winkelförmig ist und zwei zueinander rechtwinklige Schenkel (5a, 5b) aufweist, deren Länge - bezogen auf die Einbaulage des Dichtelements (5) - durch die Erstreckung des frei liegenden Eckbereichs (8) der Außenseite der Kanalwand (6) begrenzt ist.

2. Anordnung nach Anspruch 1, **dadurch gekennzeichnet, daß** das Dichtelement (5) formstabil ist.

3. Anordnung nach Anspruch 1 oder 2, **dadurch gekennzeichnet, daß** das Dichtelement (5) entweder zweiteilig aus zwei formstabilen Schenkeln über Eck zusammengesetzt ist oder einstückig sowie winkelförmig aus zwei im wesentlichen senkrecht zueinander stehenden Schenkeln (5a, 5b) besteht.

4. Anordnung nach einem oder mehreren der Ansprüche 1 - 3, **dadurch gekennzeichnet, daß** das Dichtelement (5) aus einem federnd kompressiblen Werkstoff, insbesondere aus Kunststoff oder Gummi, besteht.

5. Anordnung nach einem der Ansprüche 1 - 4, **dadurch gekennzeichnet, daß** das Dichtelement (5) auf mindestens einer Seite einen vorspringenden Anschlag (11 bzw. 14) aufweist.

6. Anordnung nach Anspruch 5, **dadurch gekennzeichnet, daß** sich der Anschlag (11 bzw. 14) nach außen und nach innen erstreckt, so daß ein im wesentlichen T-förmiger Querschnitt des Dichtelementes (5) entsteht.

7. Anordnung nach einem oder mehreren der Ansprüche 1 - 6, **dadurch gekennzeichnet, daß** jedes Dichtelement (5) nach dem Aufschieben des Verbindungsflanschrahmens (2) auf das Kanalteilstück (1) in den betreffenden Spalt (16) einschiebbar ist.

8. Anordnung nach einem oder mehreren der Ansprüche 1 - 4, **dadurch gekennzeichnet, daß** das Dichtelement (5) einen im wesentlichen U-förmigen Querschnitt mit nach außen weisender U-förmiger Öffnung besitzt zum Aufschieben des Dichtelementes (5) auf den Eckwinkel (4) vor dem Aufsetzen des Verbindungsflanschrahmens (2) auf das Kanalteilstück (1).

9. Anordnung nach einem oder mehreren der Ansprüche 1 - 8, **dadurch gekennzeichnet, daß** das Dichtelement (5) als winkelförmiges Formteil mit U-förmigem Querschnitt zum Aufschieben auf den freien Eckbereich der Kanalwand (6) vor dem Montieren des Verbindungsflanschrahmens (2) ausgebildet ist.

## Claims

1. A coupling and sealing arrangement for ventilation conduits, comprising
- duct sections (1) having a rectangular cross section of flat material, in particular of sheet metal or of a flexible material, and
- coupling flange frames (2) slipped on, and attached to, the ends of the duct sections (1) for coupling the duct sections (1), wherein
- each coupling flange frame (2) consists of four flange profiles (3) essentially L-shaped in cross section and of four corner brackets (4) having their legs (4a, 4b) inserted in the open ends of, and being attached to, the flange profiles (3) at the four corners of the coupling flange frame (2) for coupling the flange profiles (3), wherein
- each corner bracket (4), after slipping the coupling flange frame (2) onto the duct section (1), overlaps the outer surface (7) of the channel wall (6) in the corner area (8) exposed between adjacent flange profiles (3), and
- the gap (16) between the inner surfaces (9, 10) of the corner bracket (4) and the facing corner area (8) of the outer surface (7) of the channel wall (6) is sealed,
- in the gap (16) between the inner surfaces (9, 10) of the corner bracket (4) and the exposed corner area (8) of the outer surface of the channel wall (6) a sealing element (5) configured as a moulded part of resilient material is arranged in such a way that the gap (16) is essentially filled and sealed by the sealing element (5),
**characterized in that**
- the sealing element (5) has an angled shape and has two legs (5a, 5b) at right angles to each other whose length - with respect to the assembled position of the sealing element (5) - is limited by the extension of the exposed corner area (8) of the outer surface of the channel wall (6).

2. The arrangement according to claim 1, **characterized in that** the sealing element (5) is dimensionally stable.

3. The arrangement according to claim 1 or 2, **characterized in that** the sealing element (5) is either in two parts composed in an angled configuration of two dimensionally stable legs, or an integral part having an angular shape of two legs (5a, 5b) essentially at right angles to each other.

4. The arrangement according to one or more of claims 1 to 3, **characterized in that** the sealing element (5) is of a resiliently compressible material, in particular of plastics material or rubber.

5. The arrangement according to any one of claims 1 to 4, **characterized in that** the sealing element (5) has a protruding stop (11 or 14) at least on one side of it.

6. The arrangement according to claim 5, **characterized in that** the stop (11 or 14) extends to the outside as well as to the inside so that an essentially T-shaped cross section of the sealing element (5) results.

7. The arrangement according to one or more of claims 1 to 6, **characterized in that** each sealing element (5), after slipping the coupling flange frame (2) onto the duct section (1), is insertable into the corresponding gap (16).

8. The arrangement according to one or more of claims 1 to 4, **characterized in that** the sealing element (5) has an essentially U-shaped cross section having a U-shaped opening facing outward for slipping the sealing element (5) onto the corner bracket (4) before placing the coupling flange frame (2) on the duct section (1).

9. The arrangement according to one or more of claims 1 to 8, **characterized in that** the sealing element (5) is configured as an angular moulded part having a U-shaped cross section to be slipped onto the free corner area of the channel wall (6) before the coupling flange frame (2) is mounted.

## Revendications

1. Dispositif de jonction et d'étanchéité pour conduits de ventilation constitués par
- des tronçons de conduit (1) avec une section à angle droit en matériau plat, en particulier en tôle ou en matériau flexible et
- des cadres à bride d'assemblage (2) qui sont enfilés sur les extrémités des tronçons de conduits pour relier les tronçons de conduits (1) et qui sont fixés à ceux-ci,
- chaque cadre à bride d'assemblage (2) étant constitué par quatre profilés à bride (3) de section substantiellement en forme de L et par quatre cornières d'angle (4) qui sont emboîtées aux quatre coins du cadre à bride d'assemblage (2) avec leurs montants (4a, 4b) dans les extrémités ouvertes des profilés à bride (3) et qui sont fixés à ceux-ci pour assembler les profilés à bride (3),
- chaque cornière d'angle (4) chevauchant, après avoir enfilé le cadre à bride d'assemblage (2) sur le tronçon de conduit (1), le côté extérieur (7) de la paroi du conduit (6) dans la zone de coin (8) dégagée entre les profilés à bride adjacents (3) et
- la fente (16) entre les côtés intérieurs (9, 10) de la cornière d'angle (4) et la zone de coin opposée (8) du côté extérieur (7) de la paroi du conduit (6) étant étanchée,
- un élément d'étanchéité (5) configuré comme une pièce moulée en matériau élastique étant placé dans la fente (16) entre les côtés intérieurs (9, 10) de la cornière d'angle (4) et la zone de coin dégagée (8) du côté extérieur de la paroi du conduit (6) de telle manière que la fente (16) est substantiellement remplie et étanchée par l'élément d'étanchéité (5),
**caractérisé en ce que**
l'élément d'étanchéité (5) est en forme d'angle et présente deux montants perpendiculaires l'un à l'autre (5a, 5b) dont la longueur - par rapport à la position de montage de l'élément d'étanchéité (5) - est limitée par l'extension de la zone de coin dégagée (8) du côté extérieur de la paroi du conduit (6).

2. Dispositif selon la revendication 1, **caractérisé en ce que** l'élément d'étanchéité (5) est indéformable.

3. Dispositif selon la revendication 1 ou 2, **caractérisé en ce que** l'élément d'étanchéité (5) est assemblé soit en deux parties à partir de deux montants indéformables en coin ou en une pièce ainsi qu'en forme d'angle à partir de deux montants (5a, 5b) substantiellement perpendiculaires l'un à l'autre.

4. Dispositif selon l'une ou plusieurs des revendications 1 à 3, **caractérisé en ce que** l'élément d'étanchéité (5) est constitué en une matière compressible élastiquement, en particulier en matière synthétique ou en caoutchouc.

5. Dispositif selon l'une des revendications 1 à 4, **caractérisé en ce que** l'élément d'étanchéité (5) présente une butée saillante (11 ou 14) sur au moins un côté.

6. Dispositif selon la revendication 5, **caractérisé en ce que** la butée (11 ou 14) s'étend vers l'extérieur et vers l'intérieur si bien qu'il se crée une section substantiellement en forme de T de l'élément d'étanchéité (5).

7. Dispositif selon l'une ou plusieurs des revendications 1 à 6, **caractérisé en ce que** chaque élément d'étanchéité (5) peut être enfoncé dans la fente concernée (16) après avoir enfilé le cadre à bride d'assemblage (2) sur le tronçon de conduit (1).

8. Dispositif selon l'une ou plusieurs des revendications 1 à 4, **caractérisé en ce que** l'élément d'étanchéité (5) possède une section substantiellement en forme d'U avec une ouverture en forme d'U tournée vers l'extérieur pour enfiler l'élément d'étanchéité (5) sur la cornière d'angle (4) avant de poser le cadre à bride d'assemblage (2) sur le tronçon de conduit (1).

9. Dispositif selon l'une ou plusieurs des revendications 1 à 8, **caractérisé en ce que** l'élément d'étanchéité (5) est configuré comme une pièce moulée angulaire avec une section en forme d'U pour être enfilé sur la zone de coin libre de la paroi du conduit (6) avant le montage du cadre à bride d'assemblage (2).
